# EUROPÄISCHE PATENTSCHRIFT

(11) **EP 2 801 726 B1**
(45) Veröffentlichungstag und Bekanntmachung des Hinweises auf die Patenterteilung: **02.11.2016**
(21) Anmeldenummer: 13166676.0
(22) Anmeldetag: 06.05.2013
(51) Int. Cl.: F16B 21/16

(54) **Sperrbolzen**
Locking bolt
Boulon d'arrêt

(43) Veröffentlichungstag der Anmeldung: 12.11.2014
(73) Patentinhaber: Erwin Halder KG, 88480 Achstetten-Bronnen (DE)
(72) Erfinder: Halder, Stefan, 88480 Achstetten-Bronnen (DE); Hummel, Dieter, 88447 Warthausen (DE)
(74) Vertreter: Hentrich Patentanwälte PartG mbB

(56) Entgegenhaltungen:
- AU-B2- 572 692
- DE-C1- 19 734 866
- US-A- 3 052 940
- US-A1- 2004 229 742

## Beschreibung

Die Erfindung betrifft einen Sperrbolzen, mit einem in einem Führungsgehäuse axial zwischen einer Sperrstellung und einer Offenstellung verstellbar gelagerten Bolzen, mit mindestens einem in jeweils einer in dem Führungsgehäuse ausgebildeten Sperröffnung radial verstellbar gelagerten Sperrmittel, das in der Offenstellung in eine in dem Bolzen ausgebildete erste Ausnehmung eingerückt ist und das in der Sperrstellung durch den Bolzen in der Sperröffnung über den Außenumfang des Führungsgehäuses hinaus radial verstellt ist, sowie mit einem dem Führungsgehäuse zugeordneten und dessen Einsetztiefe in eine Bauteilöffnung begrenzenden Abschlussteil.

Derartige Sperrbolzen sind aus dem Stand der Technik - beispielsweise aus der DE 20 2005 005 057 U1 - bereits seit langem bekannt und werden häufig dazu verwendet, mehrere Bauteile miteinander zu verbinden und deren Lage relativ zueinander zu sichern. Hierzu sind in den in den Bauteilen Bauteilöffnungen ausgebildet, in die der Sperrbolzen so eingeführt werden kann, dass der die Sperröffnung tragende Teil des Führungsgehäuses auf der der Einführrichtung entgegen gerichteten Seite herausragt. Werden nun im eingeführten Zustand die Sperrelemente radial nach außen verstellt, so ist ein Entfernen des Sperrbolzens aus den Bauteilöffnungen nicht mehr möglich. Die Bauteile sind nun fest miteinander verbunden. Alternativ können in den zu fixierenden Bauteilen entsprechende Strukturen ausgebildet sein, in die die Sperrmittel in der Sperrstellung eingerückt sind. Der Bolzen ist bei den aus dem Stand der Technik bekannten Sperrbolzen in der Regel durch eine Feder beaufschlagt, die eine Verstellung des Bolzens in die Sperrstellung bewirkt. Zum Verstellen des Bolzens aus der Sperrstellung in die Offenstellung muss der Bolzen also zunächst in Einführrichtung gegen die Kraft der Feder manuell axial verstellt werden. In der Offenstellung fluchtet dann die erste Ausnehmung des Bolzens mit den Sperröffnungen und die Sperrmittel können in die erste Ausnehmung einrücken, wodurch der Sperrbolzen aus der Bauteilöffnung entfernt werden kann. Zum Einführen des Sperrbolzens in eine Bauteilöffnung muss weiterhin gewährleistet sein, dass sich der Bolzen in der Offenstellung befindet, da sonst die radial über den Außenumfang des Führungsgehäuses verstellten Sperrmittel ein Einführen des Sperrbolzens verhindern würden. Der Bolzen muss also auch beim Einführen in eine Bauteilöffnung manuell axial in die Offenstellung verstellt werden, was sich insbesondere bei schwer zugänglichen Platzverhältnissen nachteilig auf die Handhabbarkeit auswirkt.

Da der Bolzen also sowohl zum Entfernen aus einer Bauteilöffnung als auch zum Einführen in eine Bauteilöffnung von dem dem Abschlussteil zuweisenden Ende her beaufschlagt werden muss, ist es zudem zwingend erforderlich, dass der Bolzen bei den aus dem Stand der Technik bekannten Sperrbolzen über das rückwärtige Ende des Abschlussteiles hinaussteht und dabei frei zugänglich ist. Dadurch entsteht jedoch das Problem, dass durch derartige Sperrbolzen eine Sicherung von hochwertigen und damit wertvollen Bauteilen nicht möglich ist, da der die Verbindung lösende Teil des Bolzens stets frei zugänglich sein muss und somit auch durch nicht berechtigte Dritte verstellt werden kann.

In der US 2004/0229742 A1 ist ein doppelwirkender Kugelsperrbolzen gezeigt, der zwei axial voneinander beabstandete Sperrelemente aufweist, die jeweils in Ausnehmungen einrücken können, die an einem Betätigungselement ausgebildet sind. Die Ausnehmungen sind dabei derart an dem Betätigungselement axial gestaffelt angebracht, dass bei einer axialen Verstellung des Betätigungselements die Sperrelemente nacheinander aus den Ausnehmungen ausrücken. Hierdurch können mit dem aus der US 2004/0229742 A1 gezeigten Kugelsperrbolzen mehrere Gegenstände miteinander verbunden und nacheinander voneinander gelöst werden. Der aus der US 2004/0229742 A1 gezeigte Kugelsperrbolzen ist aber nicht dazu ausgelegt, als Diebstahlschutz zu dienen.

Die US 3,052,940 zeigt einen Kugelsperrbolzen, der zum Verbinden zweier vorgesehen ist. Zum arretieren des Kugelsperrbolzens muss dessen Körper gegen eine axial Feder verstellt werden, so dass die Sperrelemente in lateralen Öffnungen ausrücken können, die in dem Gehäuse des Kugelsperrbolzens ausgebildet sind. Sobald die Sperrelemente ausrücken, wird ein Betätigungsmittel axial verstellt und blockiert den Körper. Zum Lösen des Kugelsperrbolzens muss das Betätigungsmittel in entgegengesetzter Richtung axial verstellt werden, wodurch die Sperrelemente gelöst werden und der Körper so verstellt wird, dass der Sperrbolzen aus einer Bauteilbohrung entnommen werden kann. Da das Betätigungsmittel und der Körper jedoch von gleichen Seite her zugänglich sind, kann der aus der US 3,052,940 bekannte Kugelsperrbolzen nicht als Diebstahlschutz verwendet werden.

Die AU 572 692 B2 zeigt einen Schnellverschluss für das Rad eines Rollstuhls, der durch einen konventionellen Kugelsperrbolzen gebildet ist. Auch hier ist eine Funktion als Diebstahlschutz nicht gegeben.

Der Erfindung liegt daher die Aufgabe zugrunde, die oben genannten Nachteile zu reduzieren und einen einfach zu handhabenden Sperrbolzen bereitzustellen, der zugleich einen Diebstahlschutz bietet.

Diese Aufgabe wird nach der Erfindung bei einem Sperrbolzen der eingangs genannten Art dadurch gelöst, dass mindestens ein durch eine an dem Führungsgehäuse axial verstellbar geführte Stellhülse radial verstellbares Haltemittel vorgesehen ist zur axialen Positionsfestlegung des Bolzens in der Offenstellung, und dass dem Bolzen eine zweite Ausnehmung zugeordnet ist zur Aufnahme des mindestens einen Haltemittels in der Offenstellung. Dadurch ist auf einfache Art und Weise sichergestellt, dass der erfindungsgemäße Sperrbolzen nur von der dem Abschlussteil wegweisenden Ende her manuell axial verstellt werden kann, wodurch ein durch den Sperrbolzen gesicherter Gegenstand effektiv vor Diebstahl geschützt ist. Zudem wird hierdurch insbesondere auch das Einführen des erfindungsgemäßen Sperrbolzens in eine Bauteilöffnung erleichtert, da beim Einführen des Sperrbolzens der Bolzen durch die Haltemittel in der Offenstellung verbleibt, was insbesondere dazu führt, dass die Sperrmittel nicht durch den Bolzen radial aus den Sperröffnungen des Führungsgehäuses verstellt sind, was sich positiv auf die Handhabbarkeit des erfindungsgemäßen Sperrbolzens auswirkt.

Besonders günstig hat es sich auch gezeigt, wenn das mindestens eine Haltemittel in jeweils einer in dem Führungsgehäuse ausgebildeten Halteöffnung radial verstellbar gelagert ist, und wenn die Stellhülse dem Führungsgehäuse außenumfangseitig zugeordnet ist. Durch das Zusammenspiel von Stellhülse und in den Halteöffnungen des Führungsgehäuses radial gelagerten Haltemitteln kann die axiale Positionsfestlegung des Bolzens in der Offenstellung auf einfache Art und Weise realisiert werden. Durch die außenumfangsseitige Zuordnung der Stellhülse zu dem Führungsgehäuse werden die Halteöffnungen durch die Stellhülse überdeckt, wodurch insbesondere gewährleistet wird, dass die Haltemittel in der Offenstellung in den korrespondierenden Halteöffnungen radial nach Innen verstellt sind, um die axiale Position des Bolzens festzulegen.

Günstig hat es sich im Rahmen der Erfindung zudem erwiesen, wenn der Stellhülse eine Hinterschneidung zur radialen Aufnahme des mindestens einen Haltemittels in der Sperrstellung zugeordnet ist. Somit kann bei einer axialen Verstellung der Stellhülse das Haltemittel in die Hinterschneidung einrücken, wodurch der Bolzen freigegeben wird und aus der Offenstellung in die Sperrstellung überführt werden kann. Im Rahmen der Erfindung ist es jedoch auch vorgesehen, dass die axiale Erstreckung der Stellhülse limitiert ist, wodurch bei einer axialen Verstellung der Stellhülse die Haltemittel in den Halteöffnungen ebenfalls radial nach außen verstellt werden können, um den Bolzen frei zu geben.

Im Rahmen der Erfindung hat es sich weiterhin als vorteilhaft gezeigt, wenn der Stellhülse auf der von dem Abschlussteil wegweisenden Seite eine Stellfläche zugeordnet ist zur axialen Beaufschlagung durch die Mündung einer Bauteilöffnung. Somit kommt es beim Einsetzen des erfindungsgemäßen Sperrbolzens in die Bauteilöffnung zu einer Anlage der Stellfläche der Stellhülse an die Mündung der Bauteilöffnung. Hierdurch kommt es beim weiteren Einführen des Sperrbolzens in die Bauteilöffnung zu einer axialen Verschiebung der Stellhülse in Richtung des Abschlussteiles, wodurch die Haltemittel radial nach außen verstellt werden können, um den Bolzen aus der Offenstellung in die Sperrstellung zu überführen.

Als besonders vorteilhaft hat es sich weiterhin erwiesen, wenn die Stellhülse innenumfangseitig einen eine Anschlagsfläche bildenden ersten Kragen aufweist, und wenn dem Führungsgehäuse eine zu der Anschlagsfläche korrespondierende Gegenanschlagsfläche zugeordnet ist. Hierdurch wird die axiale Verstellung der Stellhülse in Einführrichtung - also entgegen der Richtung des Abschlussteiles - effektiv begrenzt. In diesem Zusammenhang hat es sich auch als günstig gezeigt, wenn zur Abstützung an dem Abschlussteil in der Sperrstellung der Stellhülse außenumfangseitig ein zweiter Kragen zugeordnet ist. Durch diesen zweiten Kragen kann die Verstellung der Stellhülse in Richtung des Abschlussteils effektiv begrenzt werden. Somit ist die Stellhülse zwischen zwei wohl definierten Endlagen axial verstellbar, wodurch sichergestellt ist, dass die Haltemittel durch die Stellhülse radial nach innen in die dem Bolzen zugeordnete zweite Ausnehmung eingerückt sind oder in den Halteöffnungen radial nach außen verstellt sind und den Bolzen freigeben.

Bewährt hat es sich zudem, wenn der Bolzen durch ein an dem Abschlussteil abgestütztes erstes Rückstellelement beaufschlagt ist. Durch das erste Rückstellelement, das beispielsweise durch eine erste Spiralfeder gebildet sein kann, wird der Bolzen durch eine Kraft beaufschlagt, die von dem Abschlussteil wegweisend in Richtung der Sperrstellung wirkt. Dies wirkt sich positiv auf die Betriebssicherheit des erfindungsgemäßen Sperrbolzens aus, da die Verstellung des Bolzens aus der Offenstellung in die Sperrstellung durch das vorgespannte erste Rückstellelement unterstützt wird. Im Rahmen der Erfindung ist es jedoch auch vorgesehen, dass das erste Rückstellelement beispielsweise an dem Führungsgehäuse abgestützt ist.

Weiterhin als günstig hat es sich erwiesen, wenn die Stellhülse durch ein an dem Abschlussteil abgestütztes zweites Rückstellelement beaufschlagt ist.

Durch das zweite Rückstellelement, das beispielsweise durch eine zweite Spiralfeder gebildet sein kann, wird eine zusätzliche Sicherung erzielt, da es zum radialen Verstellen der Haltemittel zunächst erforderlich ist, die Stellhülse gegen die Kraft des zweiten Rückstellelementes zu verstellen, bevor die Haltemittel aus den zweiten dem Bolzen zugeordneten Ausnehmungen radial nach außen ausrücken können. Dies hat somit einen positiven Einfluss auf die Betriebssicherheit des erfindungsgemäßen Sperrbolzens.

Als besonders vorteilhaft hat es sich hierbei auch erwiesen, wenn das erste Rückstellelement dem zweiten Rückstellelement entgegenwirkt und wenn die Federkonstante des ersten Rückstellelementes gleich oder größer ist als die Federkonstante des zweiten Rückstellelementes. Durch die gegenläufige Beaufschlagung von Bolzen und Stellhülse und die geeignete Wahl der Federkonstanten ist gewährleistet, dass in der Sperrstellung die den Bolzen haltende Federkraft größer ist als die Federkraft, die entgegen der Einschubrichtung in die Bauteilöffnung wirkt.

Im Rahmen der Erfindung ist es weiterhin vorteilhaft, wenn das mindestens eine Sperrmittel als eine Sperrkugel gebildet ist und wenn das mindestens eine Haltemittel als eine Haltekugel gebildet ist. Da Kugeln kostengünstig herzustellen sind, hat dies einen positiven Einfluss auf die Herstellungskosten des erfindungsgemäßen Sperrbolzens. Zudem kann durch eine geeignete Gestaltung der ersten Ausnehmung und der zweiten Ausnehmung die radiale Verstellung der Sperrmittel bzw. der Haltemittel erfolgen. Im Rahmen der Erfindung ist es jedoch auch vorgesehen, dass das Sperrmittel und/oder das Haltemittel als ein Kugelkappen aufweisender Sperrzylinder und/oder Haltezylinder ausgebildet ist.

Günstig ist es weiterhin, wenn dem Abschlussteil eine Lauffläche zugeordnet ist zur Befestigung eines Lagers eines Laufrades. Somit kann der erfindungsgemäße Sperrbolzen beispielsweise zur Befestigung von hochwertigen Laufrädern bzw. Laufrollen in Rollkoffern bzw. Trolleys verwendet werden. Da der Sperrbolzen nur durch die manuelle axiale Verstellung des Bolzens an dem der Bauteilöffnung wegweisenden Ende aus der Sperrstellung in die Lösestellung überführt werden kann, ist ein durch den Sperrbolzen befestigtes Laufrad effektiv vor Diebstahl geschützt.

Weiterhin umfasst die Erfindung eine Kombination aus einem Sperrbolzen und einem Laufrad. Das Laufrad kann auf den Sperrbolzen aufgeschoben werden und in eine dafür vorgesehene Bauteilöffnung eingeführt werden. Durch den Sperrbolzen ist auf einfache aber effektive Art und Weise gewährleistet, dass die durch den Sperrbolzen befestigte Laufrolle vor Diebstahl geschützt ist. Zudem ist eine einfache Montage gewährleistet.

Im Folgenden wird die Erfindung an einem in der Zeichnung dargestellten Ausführungsbeispiel näher erläutert; es zeigen:
- Fig. 1: einen Sperrbolzen mit einem Bolzen in der Offenstellung, und
- Fig. 2: den Sperrbolzen aus der Figur 1 mit dem Bolzen in der Sperrstellung.

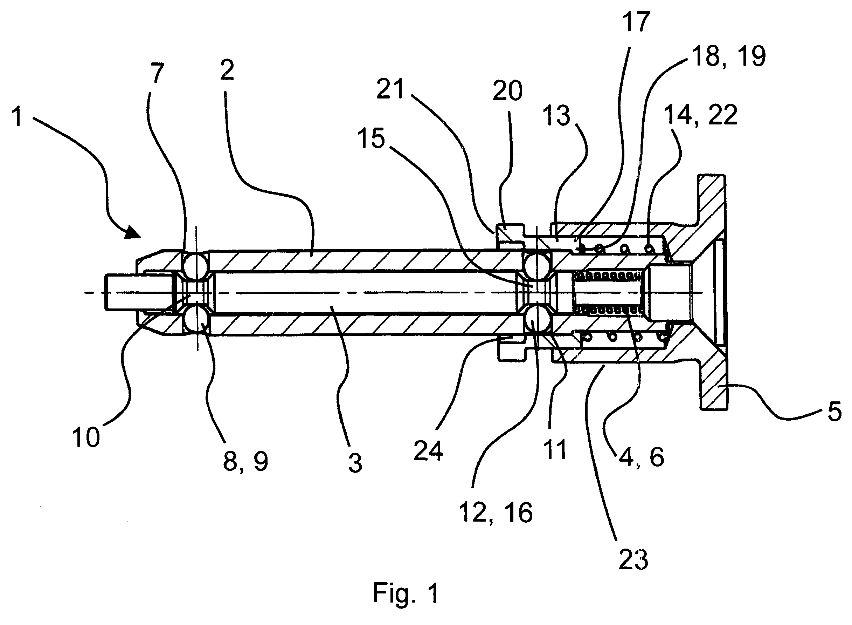

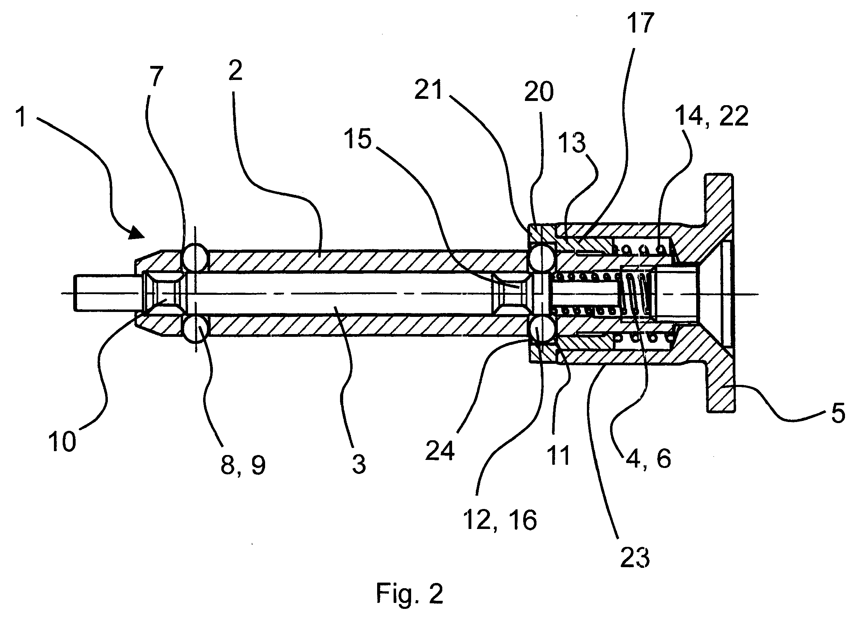

Figur 1 zeigt einen erfindungsgemäßen Sperrbolzen 1 mit einem Führungsgehäuse 2, in dem ein Bolzen 3 axial zwischen einer Offenstellung, die in der Figur 1 dargestellt ist, und einer Sperrstellung verstellbar gelagert ist, die in Figur 2 gezeigt ist. Der Bolzen 3 ist dabei über ein erstes Rückstellelement 4 beaufschlagt, das an einem Abschlussteil 5 gelagert ist und das die Einsetztiefe des Sperrbolzens 1 in eine Bauteilöffnung begrenzt. Das erste Rückstellelement 4, das in dem gezeigten Ausführungsbeispiel als eine erste Spiralfeder 6 gebildet ist, übt auf den Bolzen 3 eine in Einführrichtung wirkende Kraft aus. In dem Führungsgehäuse 2 sind in Sperröffnungen 7 radial verstellbar gelagerte Sperrmittel 8 vorgesehen, die durch Sperrkugeln 9 gebildet sind und die in der in der Figur 1 dargestellten Offenstellung in eine erste Ausnehmung 10 eingerückt sind, die in dem Bolzen 3 ausgebildet ist. In dem Führungsgehäuse 2 sind weiterhin in Halteöffnungen 11 radial verstellbare Haltemittel 12 gelagert, die in der Offenstellung durch eine Stellhülse 13, die durch ein ebenfalls an dem Abschlussteil 5 abgestütztes zweites Rückstellelement 14 beaufschlagt ist, radial nach innen in eine an dem Bolzen 3 ausgebildete zweite Ausnehmung 15 eingerückt sind. Durch die Haltemittel 12, die in dem gezeigten Ausführungsbeispiel als Haltekugeln 16 ausgeführt sind, wird der Bolzen 3 in der Offenstellung gehalten, wodurch der Sperrbolzen 1 nun einfach in eine Bauteilöffnung eingeführt werden kann. Die Stellhülse 13 ist an dem Führungsgehäuse 2 axial verschiebbar gelagert, wobei die Endlagen der Stellhülse 13 einerseits durch einen innenumfangseitig angeordneten ersten Kragen 17, der eine Anschlagsfläche 18 zu einer an dem Führungsgehäuse 2 ausgebildeten korrespondierenden Gegenanschlagsfläche 19 bildet, und andererseits durch einen zweiten Kragen 20 begrenzt, der außenumfangseitig an der Stellhülse 13 angeordnet ist und der in der Sperrstellung an dem Abschlussteil 5 abgestützt wird. Durch den zweiten Kragen 20 ist zudem eine Stellfläche 21 gebildet, die beim Einsetzen des erfindungsgemäßen Sperrbolzens 1 in eine Bauteilöffnung zur Anlage an die Mündung der Bausteilöffnung kommt und dazu führt, dass sich die Stellhülse 13 dabei axial in Richtung des Abschlussteils 5 verstellt. Die Stellhülse 13 muss dabei entgegen der Kraft des zweiten Rückstellelements 14 verstellt werden, das durch eine zweite Spiralfeder 22 gebildet ist. Die Kraftwirkung der zweiten Spiralfeder 22 ist dabei entgegen der Kraftwirkung der ersten Spiralfeder 6 gerichtet. Zudem ist die Federkonstante der zweiten Spiralfeder 22 kleiner als die Federkonstante der ersten Spiralfeder 6. In der Offenstellung ist die erste Spiralfeder 6 gespannt und die zweite Spiralfeder 22 entspannt. Dem Abschlussteil 5 ist zudem eine Lauffläche 23 zugeordnet, die geeignet ist, eine Laufrolle aufzunehmen.

Figur 2 zeigt den erfindungsgemäßen Sperrbolzen 1 mit dem Bolzen 3 in der Sperrstellung. Durch die axiale Verstellung des Bolzens 3 sind die als Sperrkugeln 9 ausgebildeten Sperrmittel 8 durch den Bolzen 3 radial aus den Sperröffnungen 7 verstellt, die in dem Führungsgehäuse 2 ausgebildet sind. Die Sperrkugeln 9 treten dabei über den Außenumfang des Führungsgehäuses 2 hinaus, wodurch ein Herausziehen des Sperrbolzens 1 aus einer Bauteilöffnung entgegen der Einführrichtung unterbunden wird, da die Sperrkugeln 9 nicht mehr in die erste Ausnehmung 10 einrücken können. Weiterhin ist der Figur 2 zu entnehmen, dass die Stellhülse 13 axial in Richtung des Abschlussteils 5 verstellt ist und mit dem zweiten Kragen 20 an dem Abschlussteil 5 abgestützt ist. Hierdurch fluchten die Halteöffnungen 11 mit einer Hinterschneidung 24, die an der Stellhülse 13 innenumfangseitig im Bereich des zweiten Kragens 20 ausgebildet ist, wodurch die Haltekugeln 16 radial nach außen in die Hinterschneidung 24 einrücken können. In der Sperrstellung ist das erste Rückstellelement 4 entspannt und das zweite Rückstellelement 14 gespannt.

Im Folgenden wird die Handhabung des erfindungsgemäßen Sperrbolzens 1 noch einmal beschrieben. Ausgehend von der in der Figur 1 dargestellten Offenstellung, in der die Sperrkugeln 9 in die erste Ausnehmung 10 und die Haltekugeln 16 durch die Stellhülse 13 in die zweite Ausnehmung 15 des Bolzens 3 eingerückt sind, kann der Sperrbolzen 1 in eine geeignete Bauteilöffnung eingeführt werden, um dabei beispielsweise auf der an dem Abschlussteil 5 ausgebildeten Lauffläche 23 ein Laufrad befestigen zu können. Der Bolzen 3 ist in der Offenstellung durch die erste Spiralfeder 6 beaufschlagt, die an dem Abschlussteil 5 abgestützt und in der Offenstellung gespannt ist. Eine axiale Verstellung des Bolzens 3 in dem Führungsgehäuse 2 aus der Offenstellung in die Sperrstellung ist jedoch trotz des vorgespannten ersten Rückstellelementes 4 dadurch unterbunden, dass die Stellhülse 13 in der Offenstellung ein radiales Heraustreten der Haltekugeln 16, die ein Verstellen des Bolzens 3 aus der Offenstellung in die Sperrstellung erst ermöglichen würde, effektiv unterbindet. Wird der Sperrbolzen 1 in eine Bauteilöffnung eingeführt, so kommt es zunächst zur Anlage der der Stellhülse 13 zugeordneten Stellfläche 21 an die Mündung der Bauteilöffnung. Ein weiteres Einführen des Sperrbolzens 1 in die Bauteilöffnung bewirkt, dass die Stellhülse 13 gegen die Federkraft der ebenfalls an dem Abschlussteil 5 abgestützten zweiten Spiralfeder 22 axial entlang des Führungsgehäuses 2 in Richtung des Abschlussteils 5 verstellt wird, bis der zweite Kragen 20 zur Anlage an das Abschlussteil 5 kommt. In dieser Stellung können die Haltekugeln 16 aus der zweiten Ausnehmung 15, die ebenfalls an dem Bolzen 3 ausgebildet ist, in die der Stellhülse 13 zugeordnete Hinterschneidung 24 einrücken. Der durch das erste Rückstellelement 4 vorgespannte Bolzen 3 kann sich nun axial in Einführrichtung verstellen, wodurch die Haltkugeln 16 radial nach außen verstellt werden und in die Halteöffnungen 11 und die Hinterschneidung 24 einrücken. Zudem rücken durch die axiale Verstellung des Bolzens 3 die Sperrkugeln 9 aus der ersten Ausnehmung 10 aus und werden durch die Sperröffnung 7 über den Außenumfang des Führungsgehäuses 2 hinaus radial verstellt. In diesem Zustand, der in der Figur 2 dargestellt sind, ist ein auf der Lauffläche 23 des erfindungsgemäßen Sperrbolzens 1 befestigtes Laufrad effektiv gesichert, da eine Überführung des Bolzens 3 aus der Sperrstellung in die Offenstellung von der dem Abschlussteil zugewandten Seite her nicht erfolgen kann. Ist das Laufrad also an einem Rollkoffer oder an einem Trolley befestigt, so ist das an der Lauffläche 23 des Sperrbolzens 1 befestigte Laufrad effektiv vor Diebstahl geschützt, da die Zugänglichkeit des die Verbindung lösenden Bolzens 3 nur vom Inneren des Rollkoffers oder des Trolleys aus gegeben ist, dessen Zugang wiederum beispielsweise durch Schlösser geschützt sein kann. Dadurch schützt der Sperrbolzen 1 effektiv vor Diebstahl.

Eine Verstellung des Bolzens 3 aus der Sperrstellung, die in der Figur 2 dargestellt ist, in die in der Figur 1 dargestellten Offenstellung nur dadurch möglich, dass der Bolzen 3 axial in Richtung des Abschlussteils 5 gegen der Federwirkung des ersten Rückstellelementes 4 verstellt wird. Nach einer derartigen Verstellung fluchtet die dem Bolzen 3 zugeordnete erste Ausnehmung 10 mit den in dem Führungsgehäuse 2 ausgebildeten Sperröffnungen 7 und die Sperrmittel 8 können in die erste Ausnehmung 10 einrücken. Weiterhin fluchtet die ebenfalls an dem Bolzen 3 ausgebildete zweite Ausnehmung 15 mit den Halteöffnungen 11, die in dem Führungsgehäuse 2 ausgebildet sind, wodurch die Haltemittel 12 in die zweite Ausnehmung 15 einrücken können. Die in der Sperrstellung auf die Stellhülse 13 wirkende Federkraft des zweiten Rückstellelements 14 bewirkt, dass es zu einer axialen Verstellung der Stellhülse 13 relativ zu dem Abschlussteil 5 kommt. Hierdurch wird wiederum das Einrücken der Haltekugeln 16 in die zweite Ausnehmung 15 erzwungen und die Haltekugeln 16 werden in der zweiten Ausnehmung 15 fixiert. Dies hat zur Folge, dass der Bolzen 3 in der Offenstellung arretiert ist und der Sperrbolzen 1 aus der Bauteilöffnung entnommen werden kann. Dies wird dadurch unterstützt, dass der Sperrbolzen bei der axialen Verstellung der Stellhülse bereits teilweise aus der Bauteilöffnung gedrückt wird. Die axiale Verstellung der Stellhülse 13 ist dabei durch die an dem ersten Kragen 17 der Stellhülse 13 gebildete Anschlagsfläche 18 und die hierzu korrespondierende Gegenanschlagsfläche 19, die an dem Führungsgehäuse 2 ausgebildet ist, begrenzt.

### Bezugszeichenliste

- 1: Sperrbolzen
- 2: Führungsgehäuse
- 3: Bolzen
- 4: erstes Rückstellelement
- 5: Abschlussteil
- 6: erste Spiralfeder
- 7: Sperröffnung
- 8: Sperrmittel
- 9: Sperrkugel
- 10: erste Ausnehmung
- 11: Halteöffnung
- 12: Haltemittel
- 13: Stellhülse
- 14: zweites Rückstellelement
- 15: zweite Ausnehmung
- 16: Haltekugel
- 17: erster Kragen
- 18: Anschlagsfläche
- 19: Gegenanschlagsfläche
- 20: zweiter Kragen
- 21: Stellfläche
- 22: zweite Spiralfeder
- 23: Lauffläche
- 24: Hinterschneidung

## Patentansprüche

1. Sperrbolzen, mit einem in einem Führungsgehäuse (2) axial zwischen einer Sperrstellung und einer Offenstellung verstellbar gelagerten Bolzen (3), mit mindestens einem in jeweils einer in dem Führungsgehäuse (2) ausgebildeten Sperröffnung (7) radial verstellbar gelagerten Sperrmittel (8), das in der Offenstellung in eine in dem Bolzen (3) ausgebildete erste Ausnehmung (10) eingerückt ist und das in der Sperrstellung durch den Bolzen (3) in der Sperröffnung über den Außenumfang des Führungsgehäuses (2) hinaus radial verstellt ist, sowie mit einem dem Führungsgehäuse (2) zugeordneten und dessen Einsetztiefe in eine Bauteilöffnung begrenzenden Abschlussteil (5), **dadurch gekennzeichnet, dass** mindestens ein durch eine an dem Führungsgehäuse (2) axial verstellbar geführte Stellhülse (13) radial verstellbares Haltemittel (12) vorgesehen ist zur axialen Positionsfestlegung des Bolzens (3) in der Offenstellung, und dass dem Bolzen eine zweite Ausnehmung (15) zugeordnet ist zur Aufnahme des mindestens einen Haltemittels (12) in der Offenstellung.

2. Sperrbolzen nach Anspruch 1, **dadurch gekennzeichnet, dass** das mindestens eine Haltemittel (12) in jeweils einer in dem Führungsgehäuse (2) ausgebildeten Halteöffnung (11) radial verstellbar gelagert ist, und dass die Stellhülse (13) dem Führungsgehäuse (2) außenumfangsseitig zugeordnet ist.

3. Sperrbolzen nach Anspruch 1 oder 2, **dadurch gekennzeichnet, dass** der Stellhülse (13) eine Hinterschneidung (24) zur radialen Aufnahme des mindestens einen Haltemittels (12) in der Sperrstellung zugeordnet ist.

4. Sperrbolzen nach einem der Ansprüche 1 bis 3, **dadurch gekennzeichnet, dass** der Stellhülse (13) auf der von dem Abschlussteil (5) wegweisenden Seite eine Stellfläche (21) zugeordnet ist zur axialen Beaufschlagung durch die Mündung einer Bauteilöffnung.

5. Sperrbolzen einem der Ansprüche 1 bis 4, **dadurch gekennzeichnet, dass** die Stellhülse (13) innenumfangsseitig einen eine Anschlagsfläche (18) bildenden ersten Kragen (17) aufweist, und dass dem Führungsgehäuse (2) eine zu der Anschlagsfläche (18) korrespondierende Gegenanschlagsfläche (19) zugeordnet ist.

6. Sperrbolzen nach einem der Ansprüche 1 bis 5, **dadurch gekennzeichnet, dass** zur Abstützung an dem Abschlussteil (5) in der Sperrstellung der Stellhülse (13) außenumfangsseitig ein zweiter Kragen (20) zugeordnet ist.

7. Sperrbolzen nach einem der Ansprüche 1 bis 6, **dadurch gekennzeichnet, dass** der Bolzen (3) durch ein an dem Abschlussteil (5) abgestütztes erstes Rückstellelement (4) beaufschlagt ist.

8. Sperrbolzen nach einem der Ansprüche 1 bis 7, **dadurch gekennzeichnet, dass** die Stellhülse (13) durch ein an dem Abschlussteil (5) abgestütztes zweites Rückstellelement (14) beaufschlagt ist.

9. Sperrbolzen nach Anspruch 8, **dadurch gekennzeichnet, dass** das erste Rückstellelement (4) dem zweiten Rückstellelement (14) entgegenwirkt, und dass die Federkonstante des ersten Rückstellelementes (4) gleich oder größer ist als die Federkonstante des zweiten Rückstellelementes (14).

10. Sperrbolzen nach einem der Ansprüche 1 bis 9, **dadurch gekennzeichnet, dass** das mindestens eine Sperrmittel (8) als eine Sperrkugel (9) gebildet ist, und dass das mindestens eine Haltemittel (12) als eine Haltekugel (16) gebildet ist.

11. Sperrbolzen nach einem der Ansprüche 1 bis 10, **dadurch gekennzeichnet, dass** dem Abschlussteil (5) eine Lauffläche (23) zugeordnet ist zur Befestigung eines Lagers eines Laufrades.

12. Kombination aus einem Sperrbolzen nach einem der Ansprüche 1 bis 11 und einem Laufrad.

## Claims

1. Locking bolt, comprising a bolt (3) in a guide housing (2), mounted so as to be movable axially between a locking position and an open position, with at least one radially movable locking means (8), mounted in a locking opening (7) formed in the guide housing (2), said locking means in the open position being withdrawn into a first cut-out aperture (10) formed in the bolt (3), and in the locking position being moved radially, by the bolt (3) in the locking opening, outwards over the outer circumference of the guide housing (2), and with a closure part (5), allocated to the guide housing (2) and limiting the insertion depth of the housing into a component opening, **characterised in that** at least one retaining means (12) is provided, said retaining means being movable radially by an adjustment sleeve (13) which is movable axially in a guided manner at the guide housing (2), these retaining means being provided for the axial position fixing of the bolt (3) in the open position, and that a second cut-out aperture (15) is allocated to the bolt for accommodating the at least one retaining means (12) in the open position.

2. Locking bolt according to claim 1, **characterised in that** the at least one retaining means (12) is mounted such as to be radially movable, in each case in a retaining opening (11) formed in the guide housing (2), and that the adjustment sleeve (13) is allocated to the guide housing (2) on the outer circumference side.

3. Locking bolt according to claim 1 or 2, **characterised in that** an undercut (24) is allocated to the adjustment sleeve (13) for the radial accommodation of the at least one retaining means (12) in the locking position.

4. Locking bolt according to any one of claims 1 to 3, **characterised in that** an adjustment surface (21) is allocated to the adjustment sleeve (13) on the side facing away from the closure part (5), for the axial imposition of force through the mouth of a component opening.

5. Locking bolt according to any one of claims 1 to 4, **characterised in that** the adjustment sleeve (13) comprises on the inner circumference side a first collar (17), forming a contact surface (18), and that a counter-contact surface (19) corresponding to the contact surface (18) is allocated to the guide housing (2).

6. Locking bolt according to any one of claims 1 to 5, **characterised in that**, for support at the closure part (5) in the locking position, a second collar (20) is allocated to the adjustment sleeve (13) on the outer circumference side.

7. Locking bolt according to any one of claims 1 to 6, **characterised in that** the bolt (3) is subjected to force by means of a first resetting element (4) supported at the closure part (5).

8. Locking bolt according to any one of claims 1 to 7, **characterised in that** the adjustment sleeve (13) is subjected to force by means of a second resetting element (14) supported at the closure part (5).

9. Locking bolt according to claim 8, **characterised in that** the first resetting element (4) counteracts the second resetting element (14), and that the spring constant of the first resetting element (4) is equal to or greater than the spring constant of the second resetting element (14).

10. Locking bolt according to any one of claims 1 to 9, **characterised in that** the at least one locking means (8) is configured as a locking sphere (9), and that the at least one retaining means (12) is configured as a retaining sphere (16).

11. Locking bolt according to any one of claims 1 to 10, **characterised in that** a running surface (23) is allocated to the closure part (5), for the securing of a bearing of a runner wheel.

12. Combination of a locking bolt according to any one of claims 1 to 11 and a runner wheel.

## Revendications

1. Boulon d'arrêt, comprenant un boulon (3), monté dans un boîtier de guidage (2) avec possibilité de déplacement axial entre une position de verrouillage et une position d'ouverture, comprenant au moins un moyen d'arrêt (8) qui est monté avec possibilité de déplacement radial respectivement dans une ouverture d'arrêt (7) réalisée dans le boîtier de guidage (2) et qui, dans la position d'ouverture, est engagé dans un premier évidement (10), réalisé dans le boulon (3), et qui, dans la position de verrouillage, est déplacé par le boulon (3) radialement au-delà du pourtour extérieur du boîtier de guidage (2), dans l'ouverture d'arrêt, et comprenant un élément d'extrémité (5) associé au boîtier de guidage (2) et limitant la profondeur d'insertion de celui-ci dans une ouverture de composant, **caractérisé en ce qu'**il est prévu au moins un moyen de maintien (12) qui peut être déplacé radialement par une douille d'actionnement (13), guidée sur le boîtier de guidage (2) avec possibilité de déplacement axial, et est destiné à la définition de position axiale du boulon (3) dans la position d'ouverture, et **en ce qu'**est associé au boulon, un deuxième évidement (15) destiné à recevoir le moyen de maintien (12), au nombre d'au moins un, dans la position d'ouverture.

2. Boulon d'arrêt selon la revendication 1, **caractérisé en ce que** le moyen de maintien (12), au nombre d'au moins un, est monté avec possibilité de déplacement radial respectivement dans une ouverture de maintien (11) réalisée dans le boîtier de guidage (2), et **en ce que** la douille d'actionnement (13) est associée au boîtier de guidage (2) côté pourtour extérieur.

3. Boulon d'arrêt selon la revendication 1 ou 2, **caractérisé en ce qu'**est associée à la douille d'actionnement (13), une contre-dépouille (24) destinée à la réception radiale du moyen de maintien (12), au nombre d'au moins un, dans la position de verrouillage.

4. Boulon d'arrêt selon une des revendications 1 à 3, **caractérisé en ce qu'**est associé à la douille d'actionnement (13), sur le côté éloigné de l'élément d'extrémité (5), une surface d'actionnement (21) destinée à la sollicitation axiale par l'embouchure d'une ouverture de composant.

5. Boulon d'arrêt selon une des revendications 1 à 4, **caractérisé en ce que** la douille d'actionnement (13) présente, côté pourtour intérieur, un collet (17) formant une surface de butée (18), et **en ce qu'**est associée au boîtier de guidage (2), une surface de contre-butée (19) correspondant à la surface de butée (18).

6. Boulon d'arrêt selon une des revendications 1 à 5, **caractérisé en ce que** pour l'appui sur l'élément d'extrémité (5) dans la position de verrouillage, un deuxième collet (2) est associé à la douille d'actionnement (13), côté pourtour extérieur.

7. Boulon d'arrêt selon une des revendications 1 à 6, **caractérisé en ce que** le boulon (3) est sollicité par un premier élément de rappel (4) qui est en appui sur l'élément d'extrémité (5).

8. Boulon d'arrêt selon une des revendications 1 à 7, **caractérisé en ce que** la douille d'actionnement (13) est sollicitée par un deuxième élément de rappel (14) qui est en appui sur l'élément d'extrémité (5).

9. Boulon d'arrêt selon la revendication 8, **caractérisé en ce que** le premier élément de rappel (4) agit à l'encontre du deuxième élément de rappel (14), et **en ce que** la constante de ressort du premier élément de rappel (4) est égale ou supérieure à la constante de ressort du deuxième élément de rappel (14).

10. Boulon d'arrêt selon une des revendications 1 à 9, **caractérisé en ce que** le moyen d'arrêt (8), au nombre d'au moins un, est réalisé comme bille d'arrêt (9), et **en ce que** le moyen de maintien (12), au nombre d'au moins un, est réalisé comme bille de maintien (16).

11. Boulon d'arrêt selon une des revendications 1 à 10, **caractérisé en ce qu'**une surface de roulement (23) est associée à l'élément d'extrémité (5), en vue de la fixation d'un palier d'une roue de roulement.

12. Combinaison d'un boulon d'arrêt selon une des revendications 1 à 11 et d'une roue de roulement.
